(19) **Europäisches Patentamt**

**European Patent Office**

**Office européen des brevets**

(11) Veröffentlichungsnummer: **0 490 245 A1**

# (12) EUROPÄISCHE PATENTANMELDUNG

(21) Anmeldenummer: **91120788.4**

(22) Anmeldetag: **03.12.91**

(51) Int. Cl.5: **C04B 35/65**, C04B 35/10, C04B 35/48

(30) Priorität: **11.12.90 DE 4039531**
**13.08.91 DE 4126738**

(43) Veröffentlichungstag der Anmeldung:
**17.06.92 Patentblatt 92/25**

(84) Benannte Vertragsstaaten:
**DE FR GB IT SE**

(71) Anmelder: **Claussen, Nils, Prof. Dr.**
**Auf den Scharzen Bergen 15**
**W-2107 Rosengarten(DE)**

(72) Erfinder: **Claussen, Nils, Prof. Dr.**
**Auf den Scharzen Bergen 15**
**W-2107 Rosengarten(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86(DE)**

(54) **ZrO2-haltiger Keramikformkörper.**

㊳ Ein neuer $ZrO_2$-haltiger Keramikformkörper ist auch an den Korngrenzen und Tripelpunkten frei von amorphen Phasen, weist gegenüber seinem Grünkörper eine Schrumpfung von weniger als 5 % auf und ist erhältlich durch Reaktionssintern eines Grünkörpers, der aus einem mechanisch legierten Gemisch geformt ist, welches mindestens 1 Vol-% Zirkoniummetallpulver und mindestens 20 Vol-% einer oder mehrerer metallischer Pulver, ausgewählt aus den Elementen Mg, Al, Cu, Se, Ti, V, Cr, Mn, Fe, Co, Ni, Zn, Sr, Y, Nb, Ce, Hf, Ta, sowie deren Oxiden und $ZrO_2$, $Na_2O$, $K_2O$, $Li_2O$ enthält oder daraus besteht. Der Formkörper eignet sich zur Verwendung im Maschinen- und Apparatebau als Konstruktionselement oder in der Elektronik als Funktionselement sowie als Festkörperelektrolyt.

EP 0 490 245 A1

Die Erfindung betrifft einen ZrO2-haltigen Keramikformkörper und ein Verfahren zur seiner Herstellung.

Ein- und mehrphasige Formkörper mit keramischer Matrix werden zunehmend als temperatur- und verschleißfeste Komponenten im Maschinen- und Apparatebau eingesetzt. Ihre Herstellung ist bekannt über klassische pulvermetallurgische Verfahren durch Pressen und Sintern. Diese Verfahren weisen den Nachteil einer hohen linearen Schrumpfung von üblicherweise 15 bis 25 % auf die zwischen Grünkörper und Endprodukt auftritt. Dies beeinträchtigt die Form- und Maßhaltigkeit, führt zu Rißbildung und anderen qualitätsmindernden Fehlern. Besonders nachteilig ist diese Schrumpfung bei der Einlagerung von Verstärkungselementen wie Fasern, Plättchen und Whiskern oder anderen, an der Schrumpfung nicht teilnehmenden Komponenten, da sie sich auf den Gefügezusammenhalt nachteilig auswirkt.

Dieser Nachteil tritt zwar bei den reaktionsgebundenen Keramiken (RBAO) kaum oder nicht auf, dafür sind dort aber lange Reaktionszeiten erforderlich. Auch wird dort nur schwierig eine Dichte von mehr als 90 % der theoretischen Dichte erzielt.

Aus der DE 38 12 266 A1 ist es bereits bekannt, einen Keramikformkörper auf Basis Aluminiumoxid und/oder Aluminiumnitrid und/oder Aluminiumoxinitrid pulvermetallurgisch herzustellen, wobei in der genannten Basisphase eine disperse anorganische Komponente eingebettet vorliegt, die aus pulverförmigem Aluminiummetall entsteht, das Legierungselemente enthalten kann, und bei der Sinterbehandlung zu Aluminiumoxid, -nitrid oder Aluminiumoxinitrid reagiert. Der erhaltene Körper weist ein deutlich verbessertes Schrumpfungsverhalten, eine geringe Porosität und zum Teil von Glasphasen freie Korngrenzen auf.

In ähnlicher Weise ist aus DE 40 17 262 und DE 40 39 530 bekannt, daß auf Basis einer Mischung aus Al-Pulver und Sihaltigen anorganischen Pulvern durch Reaktion in O2-haltiger Atmosphäre ein Mullitkeramikkörper erhalten wird, der wenig schrumpft. Sowohl bei DE 38 12 226 und DE 40 39 530 sind die Reaktionszeiten jedoch sehr lang, beispielsweise 8 h bei 1150°C und anschließend nochmals 5 h bei 1500°C. Dies hat den Nachteil, daß der Prozeß energieaufwendig ist und daß entsprechend hergestellte Teile nicht zusammen mit anderen konventionellen Keramikgrünkörpern gesintert werden können. Sie müssen meistens in einem zweistufigen Prozeß zunächst reagiert und anschließend gesintert werden. Außerdem führen die Si-haltigen Zusätze in DE 40 39 530 zu amorphen intergranularen Phasen, die die Hochtemperatureigenschaften drastisch verschlechtern. Die in DE 38 12 226 geforderten Legierungszusätze behindern zusätzlich die gleichmäßige Oxidation der Al-Partikelchen, so daß Risse und größere Poren entstehen, die ebenfalls festigkeitsreduzierend wirken.

Der Erfindung liegt daher die Aufgabe zugrunde, reaktionsgeformte Keramikkörper zu schaffen, die ebenfalls die oben genannten, vorteilhaften Eigenschaften, nämlich geringe lineare Schrumpfung zwischen Grünkörper und Endprodukt, geringe Porosität sowie überhaupt keine Glasphasen aufweisen. Die wichtigste Aufgabe der Erfindung ist jedoch, einen entsprechenden Grünkörper zu schaffen, der ohne allzu lange Haltezeit in der Reaktionsstufe oder sogar ohne jegliche Haltezeit auf die Sintertemperatur aufgeheizt werden kann. Dabei soll eine vollständige und gleichmäßige Reaktion gewährleistet sein.

Gelöst wird diese Aufgabe erfindungsgemäß durch einen ZrO2-haltigenKeramikformkörper, der dadurch gekennzeichnet ist, daß er auch an den Korngrenzen und Tripelpunkten frei von amorphen Phasen ist, gegenüber seinem Grünkörper eine Schrumpfung von weniger als 8 % aufweist und durch Reaktionssintern eines Grünkörpers erhältlich ist, der aus einem mechanisch legierten Gemisch geformt ist, welches mindestens 1 Vol.-% Zirkoniummetallpulver und mindestens 20 Vol.-% einer oder mehrerer metallischer Pulver, ausgewählt aus den Elementen Mg, Al, Cu, Se, Ti, V, Cr, Mn, Fe, Co, Ni, Zn, Sr, Y, Nb, Ce, Hf, Ta, sowie deren Oxiden und ZrO2, Na2O, K2O, Li2O enthält oder daraus besteht.

Die erfindungsgemäßen Formkörper weisen Dichten auf, die im allgemeinen 90 % TD überschreiten und vorzugsweise zwischen 92 und 98 % TD liegen. Das ZrO2 liegt in der Matrix dispersiert ganz oder überwiegend in der tetragonalen Modifikation vor, was u.a. auch durch die Stabilisierung mit Y2O3, Ce2O2 oder MgO bewirkt wird, die mittlere Korngröße liegt unter 5 $\mu$m, vorzugsweise unter 1 $\mu$m. Die Volumenveränderung beträgt gegenüber dem Grünzustand im allgemeinen ± 8 %, vorzugsweise -3 bis +1 %. Eine Glasphase fehlt völlig, sogar an den Korngrenzen und Tripelpunkten zumal glasbildende Substanzen wie Si und SiO2 in dem pulverförmigen Ausgangsmaterial nicht enthalten sind, abgesehen von unvermeidlichen Verunreinigungen in Spurenform. Außerdem können geringe Mengen Alkalioxide vorhandensein, wenn spezielle Mineralzusammensetzungen gewünscht werden, wie z.B. eine Nebenphase aus $\beta$- oder $\beta''$-Al2O3.

Gerade bei der Al2O3-Nebenphase, die bevorzugt aus der $\beta''$-Kristallform besteht, hat sich der Zr/ZrO2-Zusatz sehr vorteilhaft für die Ausbildung einer feinen, glasphasenfreien Kornstruktur erwiesen, was diese Festkörperelektrolytkeramik viel fester gegenüber konventionell hergestelltem $\beta/\beta''$-Al2O3 macht.

Als Legierungselemente enthält der erfindungsgemäße Keramikformkörper vorzugsweise Zusätze von Al, Y, Cr, Ce, Ti, Mg, Nb, Ta gegebenenfalls zusammen mit Alkalimetallen, wobei letztere auch in Form ihrer Oxide oder Salze wie der Carbonate, eingesetzt werden.

Die Herstellung des erfindungsgemäßen Formkörpers erfolgt, indem man Zirkoniummetall mit einem oder mehreren der Elemente Mg, Al, Cu, Se, Ti, V, Cr, Mn, Fe, Co, Ni, Zn, Sr, Y, Nb, Ce, Hf, Ta in Metallform und Oxidform oder/und mit $ZrO_2$, $Na_2O$, $K_2O$, $Li_2O$ so vermischt, daß man eine feinteilige mechanisch legierte Pulvermischung erhält, die dann zu einem Grünkörper verpresst wird, den man in sauerstoffhaltiger Atmosphäre sintert. Falls $\beta/\beta''$-$Al_2O_3$ hergestellt werden soll, ist es wichtig, daß die Mischung auch $Na_2O$ und Al sowie gegebenenfalls auch $ZrO_2$ enthält. Ferner ist es wichtig, daß das Al-Pulver so inniglich mit dem Zr- bzw. $ZrO_2$-Pulver vermischt wird, daß anschließend nanometergroße Teilchen aus Zr oder $ZrO_2$ in den Al-Partikelchen verteilt sind bzw. sich partiell eine Dispersion einer intermetallischen Phase $Al_xZr_y$, vorzugsweise $Al_3Zr$, innerhalb der Al-Teilchen bildet.

Die Zusammensetzung der Pulvermischung, die im wesentlichen aus Metall und Metalloxid besteht, kann in weiten Grenzen schwanken. Der Anteil an metallischem Zirkonium liegt im allgemeinen zwischen 1 und 50 Vol.-%. Wenn der Anteil an Zr-Metall 20 % überschreitet, wird vorzugsweise auch $ZrO_2$ in einer Menge die dem Volumenprozentsatz des Zr-Metalls ± 25 Vol.-% entspricht, eingesetzt. Die im Gemisch enthaltene Menge an Oxiden liegt vorzugsweise zwischen 20 und 65 Vol.-%, jedoch können diese Werte je nach den gewünschten Eigenschaften und der Sinterdauer auch unterschritten oder überschritten werden. Der Anteil an Metallpulver liegt zwischen 20 und 80 Vol.-%, vorzugsweise zwischen 30 und 75 Vol.-%, wobei der Rest im wesentlichen aus Oxid besteht.

Die pulverförmigen Ausgangsstoffe werden zweckmäßig in einer Kugelmühle in einer wenig freien Sauerstoff enthaltenden organischen Flüssigkeit mindestens 30 Minuten mechanisch legiert. Bevorzugt erfolgt das mechanische Legieren in der Kugelmühle während eines Zeitraums von 4 bis 12 Stunden. Als organische Flüssigkeit eignen sich niedrige Alkohole, wie z.B. Isopropanol, Ethanol, Ketone wie Aceton oder Kohlenwasserstoffe, insbesondere solche mit zwischen 5 und 8 C-Atomen. Die mittlere Korngröße des gemahlenen Pulvers soll unter 5 $\mu$m, vorzugsweise unter 1 $\mu$m liegen.

Als Kugelmühle wird bevorzugt eine Attritormühle, eine Rührwerks- oder Perlmühle verwendet.

Dem wie oben beschrieben hergestellten mechanisch legierten Pulvergemisch können gegebenenfalls noch teilchenförmige Phasen zugesetzt werden, die bestimmte Eigenschaften wie Festigkeit verbessern, vorzugsweise $Al_2O_3$, AlN, SiC, TiC, NbC, TaC, $TiB_2$ oder/und $B_4C$. Diese teilchenförmige Phase kann zweckmäßig faserförmig oder plättchenförmig sein, jedoch können auch andere Konfigurationen verwendet werden, wenn damit bestimmte Wirkungen angestrebt sind.

Aus dem wie beschrieben hergestellten pulverförmigen legierten Gemisch wird dann der gewünschte Grünkörper unter Anwendung pulvermetallurgischer Methoden geformt. Da die Schrumpfung gering ist, kann bereits der Grünkörper auf die genaue Form des gewünschten Keramikkörpers gebracht werden, da durch die geringfügige und bis 0 gehende Volumenveränderung beim Reaktionssintern nur geringe oder gar keine Nachbearbeitung mehr erforderlich ist. Als pulvermetallurgische Formungsmethoden kommen einachsiges Pressen, Isostatpressung, Schlickergießen, Tapegießen oder Spritzgießen in Betracht. Bei der Isostatpressung eignen sich insbesondere Drücke zwischen 100 und 1000 MPa.

Die Reaktionssinterung des so erhaltenen Grünkörpers kann einstufig oder mehrstufig in der sauerstoffhaltigen Atmosphäre durchgeführt werden. Infolge des Zusatzes von mindestens 1 Vol.-% Zr wird der Prozeß aber vorzugsweise einstufig durchgeführt, da aufgrund der katalytischen Wirkung des Zr eine sehr schnelle Oxidation des Al stattfindet. Eine Ausnahme stellt $\beta/\beta''$-$Al_2O_3$ dar, bei dem in der Reaktionsstufe zunächst die Reaktion zwischen $Al_2O_3$ und $Na_2O$ stattfinden muß. Aber auch diese Reaktion wird durch Zr günstig beeinflußt. In der Aufheizphase, im wesentlichen zwischen 200 und 800°C, reagieren die metallischen Bestandteile des Grünkörpers teils mit dem Sauerstoff der Atmosphäre, teils mit den im Gemisch selbst enthaltenen Oxiden unter Volumenzunahme, welche die Schrumpfung beim Sintern ausgleicht und dadurch hohe Dichte und geringe Porosität zur Folge hat.

Der Grünkörper wird gemäß einer ersten Ausführungsform des erfindungsgemäßen Verfahrens in sauerstoffhaltiger Atmosphäre mit geregelter Aufheizrate, die vorzugsweise 1 bis 10 K/min beträgt, auf eine Endtemperatur von 1300 bis 1650°C aufgeheizt und solange gehalten, bis die Oxidationsreaktion vollständig abgelaufen ist.

Gemäß einer zweiten Ausführungsform des erfindungsgemäßen Verfahrens wird der Grünkörper zur Herstellung von $\beta/\beta''$-$Al_2O_3$ in einer ersten Reaktionsstufe wiederum mit geregelter Aufheizrate auf eine Temperatur von 900 bis 1250°C erhitzt, 0,5 bis 4 Stunden lang bei dieser Temperatur gehalten und danach in einer zweiten Stufe auf eine Sintertemperatur von 1300 bis 1650°C erhitzt und dort erneut 0,5 bis 4 Stunden bis zur Beendigung der Reaktion und des Sintervorgangs gehalten.

Während der Sinterstufe kann die Atmosphäre bewegt oder ruhen gelassen werden. Bewegte Atmosphäre führt im allgemeinen zu einer Verkürzung der Erhitzungsdauer. Als Atmosphäre kommen in Betracht reiner Sauerstoff, Sauerstoff- Stickstoffgemische wie normale Luft, Sauerstoff-Edelgasgemische, insbesondere mit Helium und Argon, sowie derartige Atmosphären mit einem gewissen Zusatz an $Na_2O$, wenn $\beta/\beta''$-$Al_2O_3$ hergestellt werden soll.

Die erfindungsgemäßen Keramikformkörper eignen sich besonders als Konstruktionselemente im Maschinen- und Apparatebau und als Funktionselemente in der Elektronik sowie als Feststoffelektrolyten.

Die folgenden Beispiele erläutern die Erfindung weiter.

## Beispiele

### Beispiel 1

150 g eines Pulvers aus 50 Vol.-% Al (Alcan 105, 20 bis 50 $\mu$m, Alcan, Montreal, Kanada) 20 Vol.-% Zr (Nr. 00847 Alfa Prod., 1 - 3 $\mu$m), 2 Vol.-% $Y_2O_3$ (No. 87829 Alfa Prod.), 18 Vol.-% $ZrO_2$ - (TZ-2Y Co., Tosoh, Japan, unter 1 $\mu$m Durchmesser) wurden 8 Stunden in einer Attritormühle mit 3 mm TZP x Kugel in Aceton gemahlen. Die mittlere Pulverteilchengröße wurde hierbei auf unter 1 $\mu$m reduziert. Dann wurde die Mischung der legierten Bestandteile mit 10 Vol.-% $Al_2O_3$-Platelets (Dycron 13, Hüls AG) gemischt, in einem Rotationstrockner getrocknet und anschließend isostatisch zu Platten mit den Abmessungen 40 x 40 x 8 mm und einem Druck von 500 MPa gepreßt unter Bildung eines Grünkörpers mit einer Grünfestigkeit von 27 MPa. Anschließend wurden die Proben an Luft mit 1 K/min auf 1550°C aufgeheizt und 2 Stunden in stehender Luft auf dieser Glühstufe gehalten. Danach war das Reaktionssintern abgeschlossen. Der erhaltene Körper hatte sich um 1 % gegenüber dem Grünzustand ausgedehnt. Dichte: 92 % TD; Gefüge: $\alpha$-$Al_2O_3$ und tetragonales $ZrO_2$; Mittlere Korngröße: unter 1 $\mu$m.

### Beispiel 2

150 g einer Pulvermischung aus 45 Vol.-% Al (wie in Beispiel 1), 10 Vol.-% Cr (Ventron Chemie), 5 Vol.-% Zr (wie in Beispiel 1) und 40 Vol.-% $Al_2O_3$ (CT 3000; Alcoa, USA) wurden wie in Beispiel 1 beschrieben, attritiert und das erhaltene Pulver mit einem Preßdruck von 700 MPa isostatisch zu einem Grünkörper gepreßt. Der erhaltene Grünkörper besaß eine Grünfestigkeit von 35 MPa. Anschließend wurde eine einstufige Reaktionssinterbehandlung wie in Beispiel 1 durchgeführt. Man erhielt einen rötlich gefärbten Keramikkörper, der tetragonale $ZrO_2$-Einlagerungen aufwies. Die Schwindung betrug 2,5 % bei einer Dichte von 94 % TD.

### Beispiel 3

150 g einer Pulvermischung aus 30 Vol.-% Al (wie in Beispiel 1), 20 Vol.-% Cr (Ventron Chemie), 20 Vol.-% Zr (wie in Beispiel 1), 25 Vol.-% $ZrO_2$ und 5 Vol.-% $CeO_2$ (Alfa Prod.) wurden mechanisch in einem Attritor in Isopropanol 8 Stunden wie in Beispiel 1 beschrieben, legiert und anschließend isostatisch mit 500 MPa zu Grünkörpern isogepreßt. Die erhaltenen Proben wurden mit 2 K/min auf 1600°C aufgeheizt und 1 Stunde bei dieser Temperatur gehalten bis das Reaktionssintern abgeschlossen war. Die fertige Probe wies eine Schrumpfung von ungefähr 1 % auf und besaß eine Dichte von 94 % TD bei geschlossener Porosität. Röntgenographisch wurde $\alpha$-$(Al, Cr)_2O_3$ mit geringen Anteil an freiem $Cr_2O_3$ und tetragonales $ZrO_2$ gefunden.

### Beispiel 4

150 g einer Pulvermischung aus 50 Vol.-% $ZrO_2$ (wie in Beispiel 1), 45 Vol.-% Zr (wie in Beispiel 1) und 5 Vol.-% $Y_2O_3$ wurden wie bei Beispiel 3 beschrieben, mechanisch legiert, getrocknet und mit Isopressdrücken von 100, 500 und 900 MPa zu stäbchenförmige Probekörpern (5 x 5 x 40 mm) geformt. Die Grünfestigkeit der bei 900 MPa gepreßten Grünkörper betrug 23 MPa. Anschließend wurden die Probekörper in einer Stufe mit 5 K/min auf 1400°C in stehender Luft aufgeheizt und 3 Stunden bei dieser Temperatur bis zum Abschluß des Reaktionssinterns gehalten. Während die mit 100 MPa gepreßte Probe zu Pulver zerfiel, entstanden aus den beiden anderen Probekörpern feste Keramikkörper mit einer Schrumpfung von 4,5 bzw. 2,3 % und Dichten von über 97 % TD. Die feinkörnigen (unter 1 $\mu$m) Proben bestanden überwiegend aus tetragonalem $ZrO_2$ mit geringen Anteilen der kubischen und monoklinen Modifikation.

### Beispiel 5

150 g einer Pulvermischung aus 50 Gew.-% $PbTiO_3$ (Alfa Prod.), 35 Gew.-% Zr (wie in Beispiel 1), 5 Gew.-% $TiO_2$ (Alfa Prod.) und 10 Gew.-% $La_2O_3$ (Alfa Prod.) wurden wie in Beispiel 3 beschrieben, attritiert, getrocknet und mit 500 MPa zum Grünkörper isogepreßt. Danach wurden die Proben in einer ersten Stufe bei 1050°C 2 Stunden lang und danach in einer zweiten Stufe bei 1400°C 2 Stunden reaktionsgesintert. Der erhaltene Körper wies keine offene Porosität mehr auf und bestand überwiegend aus der Perovskitstruktur des PLTZ mit dispergiertem tetragonalem $ZrO_2$.

### Beispiel 6

Dem gemäß Beispiel 4 mechanisch legierten Pulver wurden 10 Vol.-% $Al_2O_3$ Platelets (Atochem, Paris, ca. 10 $\mu$m Durchmesser, 1 $\mu$m Dicke) beigemischt. Dazu wurde nach der 8-stündigen Attritierung ohne Platelets (bei 700 Upm in einem 750 $cm^3$ Laborattritor) 15 Minuten mit den Platelets bei 300 Upm homogenisiert. Nach der Trocknung wurde bei 900 MPa isogepreßt und der erhaltene Grünkörper wie in Beispiel 4 beschrieben, reaktionsgesintert. Die erhaltenen Keramikproben zeigten keine Schrumpfung und keine offene Porosität.

### Beispiel 7

150 g einer Pulvermischung aus 8 Gew.-% $Na_2CO_3$ (pulvrig, Merck AG) 55 Gew.-% $Al_2O_3$ - (Ceralox MPA), 25 Gew.-% Al (wie Beispiel 1), 10 Gew.-% Zr (wie Beispiel 1), 1,5 Gew.-% MgO (Alfa Prod.) und 0,5 Gew.-% $Li_2O$ (Alfa Prod.) wurden 4 h in einem Attritor in Isopropanol gemahlen. Die flüssige Mischung (Feststoffanteil ca. 60 %) wurde anschließend in eine Gipsform gegossen, so daß plattenförmige Proben mit den Abmessungen 20 x 20 x 3 mm entstanden. Die getrockneten Plättchen wurden dann in einem abgedeckten $Al_2O_3$-Tiegel in einem $Na_2CO_3$-Pulverbett zunächst mit 1 K/min auf 1200°C aufgeheizt und 1 h gehalten, anschließend wurde auf 1600°C mit 10 K/min aufgeheizt und ebenfalls 1 h gehalten. Nach Ofenabkühlung bestanden die Proben überwiegend aus $\beta''$-$Al_2O_3$ - (=$Na_2O.5\ Al_2O_3$) und $ZrO_2$ und hatten bei einer Schrumpfung von 2 % eine Dichte von 96 % DT. Die 3-Punktbiegefestigkeit von Stäbchen mit den Abmessungen 28 x 2 x 2 mm betrug 320 MPa.

### Beispiel 8

Proben nach Beispiel 6 wurden bei 1600°C und 10 min in einer Heiß-Isostatpresse bei einem Argondruck von 200 MPa nachverdichtet. Die nahezu 100 % dichten Proben wiesen eine 4-Punktbiegefestigkeit von 1680 MPa auf.

### Beispiel 9

150 g einer Pulvermischung aus 9 Gew.-% $Na_2CO_3$ (wie Beispiel 7), 54 Gew.-% $Al_2O_3$ (wie Beispiel 7), 25 Gew.-% Al (wie Beispiel 7), 9 Gew.-% $ZrO_2$ (TZ-2Y, Tosoh, siehe Beispiel 1), 1 Gew.-% Zr, 1,5 Gew.-% MgO und 0,5 Gew.-% $Li_2O$ wurden 4 h in einem $ZrO_2$-ausgekleideten Attritor mit $ZrO_2$-Mahlkugeln und $ZrO_2$-Mahlscheiben in Ethanol gemahlen. In einer Variante wurden 9 Gew.-% $Na_2CO_3$ durch 9 Gew.-% einer Mischung aus $Na_2CO_3$ und $K_2CO_3$ (Alfa Products) im Molverhältnis 0,7 : 0,3 ersetzt.

Der Schlicker wurde anschließend im Rotationsverdampfer getrocknet. Danach wurden die Pulver zu Platten 40 x 40 x 8 mm (wie Beispiel 1) mit einem isostatischen Druck von 300 MPa verpreßt. Die Grünproben wurden darauf (wie in Beispiel 7) in einem abgedeckten $Al_2O$)-Tiegel, der 5 g $Na_2CO_3$-Pulver enthielt, zunächst mit 1 K/min auf 1200°C aufgeheizt und 2 h gehalten, anschließend wurde mit 5 K/min auf 1600°C aufgeheizt und 1 h gehalten.

Nach Ofenabkühlung bestanden beide Varianten überwiegend (> 60 %) aus $\beta''$-$Al_2O_3$ mit eingelagerten, überwiegend (> 80 %) tetragonalen $ZrO_2$-Teilchen. Die Schrumpfung betrug 3,1 % bei einer Dichte von 95 % TD. Die 3-Punktbiegefestigkeit von Stäbchen mit Abmessungen 28 x 2 x 2 mm betrug 290 MPa. Die $K_2O$-haltige Variante hatte eine Dichte von 96 % bei einer Schrumpfung von 3,6 % und einer Festigkeit von 315 MPa.

### Patentansprüche

1. $ZrO_2$-haltiger Keramikformkörper,
   **dadurch gekennzeichnet,**
   daß er auch an den Korngrenzen und Tripelpunkten frei von amorphen Phasen ist, gegenüber seinem Grünkörper eine Schrumpfung von weniger als 8 % aufweist und durch Reaktionssintern eines Grünkörpers erhältlich ist, der aus einem mechanisch legierten Gemisch geformt ist, welches mindestens 1 Vol.-% Zirkoniummetallpulver und mindestens 20 Vol.-% einer oder mehrerer metallischer Pulver, ausgewählt aus der aus den Elementen Mg, Al, Se, Ti, V, Cr, Mn, Fe, Co, Ni, Cu, Zn, Sr, Y, Nb, Ce, Hf, Ta, sowie deren Oxiden und $ZrO_2$, $Na_2O$, $K_2O$, $Li_2O$ enthält oder daraus besteht.

2. Verfahren zur Herstellung des Formkörpers nach Anspruch 1,
   **dadurch gekennzeichnet,**
   daß man aus Zirkoniummetall und einem oder mehreren der in Anspruch 1 aufgeführten Metalle und Oxide oder $ZrO_2$ eine feinteilige mechanisch legierte Pulvermischung herstellt, die Mischung zu einem Grünkörper verpreßt und den Grünkörper in sauerstoffhaltiger Atmosphäre sintert.

3. Verfahren nach Anspruch 2,
   **dadurch gekennzeichnet,**
   daß man die pulverförmigen Ausgangsstoffe in einer Kugelmühle in einer wenig freien Sauerstoff enthaltenden organischen Flüssigkeit, (wie Aceton, Ethanol, Isopropanol oder n-Hexan,) mindestens 30 Minuten mechanisch legiert.

4. Verfahren nach Anspruch 3,
**dadurchgekennzeichnet,**
daß man das Legieren in einer Attritormühle, Rührwerks- oder Perlmühle durchführt.

5. Verfahren nach einem der Ansprüche 2 bis 4,
**dadurch gekennzeichnet,**
daß man zur Herstellung der $\beta/\beta''$-$Al_2O_3$-Modifikation das pulverförmige Gemisch aus 1 bis 5 Vol.-% Zr, 0 bis 10 Vol.-% $ZrO_2$, 30 bis 50 Vol.-% $Al_2O_3$, 20 bis 30 Vol.-% Al, 15 bis 30 Vol.-% $Na_2CO_3$ oder $Na_2O$, 0 bis 5 Vol.-% $Y_2O_3$, 0 bis 2 Vol.-% MgO und/oder 0 bis 2 Vol.-% $Li_2O$ mechanisch legiert.

6. Verfahren nach einem der Ansprüche 2 bis 5,
**dadurch gekennzeichnet,**
daß man dem mechanisch legierten Pulver eine teilchenförmige Phase aus $Al_2O_3$, AlN, SiC, TiC, NbC, TaC, $TiB_2$ oder/und $B_4C$ zumischt.

7. Verfahren nach Anspruch 6,
**dadurch gekennzeichnet,**
daß die zugemischte Phase faserförmig oder plättchenförmig ist.

8. Verfahren nach einem der Ansprüche 2 bis 7,
**dadurch gekennzeichnet,**
daß der Grünkörper aus dem pulverförmigen legierten Gemisch pulvermetallurgisch geformt, insbesondere durch einachsiges Formpressen, Isostatpressung, Schlicker-, Tape- oder Spritzgießen und danach auf Endmaß grünbearbeitet wird.

9. Verfahren nach einem der Ansprüche 2 bis 8,
**dadurch gekennzeichnet,**
daß die Reaktionssinterung des Grünkörpers ein- oder mehrstufig durchgeführt wird.

10. Verfahren nach Anspruch 9,
**dadurch gekennzeichnet,**
daß der Grünkörper in sauerstoffhaltiger Atmosphäre in einer Reaktionsstufe mit einer Aufheizrate von 1 bis 10 K/min auf eine Endtemperatur von 1300 bis 1650°C aufgeheizt wird.

11. Verfahren nach Anspruch 9,
**dadurch gekennzeichnet,**
daß der Grünkörper für den Fall der Herstellung von $\beta/\beta''$-$Al_2O_3$ in einer ersten Reaktionsstufe in einer $Na_2O$-haltigen Atmosphäre auf 900 bis 1250°C erhitzt und 0,5 bis 4 h gehalten und danach in einer zweiten Stufe auf eine Sintertemperatur von 1300 bis 1650°C erhitzt wird.

12. Verfahren nach einem der Ansprüche 9, 10 oder 11,
**dadurch gekennzeichnet,**
daß das Reaktionssintern in einer sauerstoffhaltigen Atmosphäre durchgeführt wird, die bewegt wird oder/und Wasserdampf enthält oder/und aus reinem Sauerstoff, einem Sauerstoff/Argongemisch oder Sauerstoff/Heliumgeliumgemisch besteht.

13. Verwendung eines Keramikformkörpers nach Anspruch 1 im Maschinen- und Apparatebau als Konstruktionselement oder in der Elektronik als Funktionselement.

14. Verwendung eines Keramikformkörpers nach den Ansprüchen 1, 5 und 11 als Festkörperelektrolyt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-C-3 812 266 (CLAUSSEN, N.) 24. August 1989 <br> * das ganze Dokument * <br> --- | 1-13 | C04B35/65 <br> C04B35/10 <br> C04B35/48 |
| A | WO-A-8 809 778 (SVENSKA SILIKATFORSKNINGSINSTITUTE) <br> * Seite 2, Zeile 17 - Zeile 22; Ansprüche 1-7 * <br> --- | 1-13 | |
| A | EP-A-0 110 712 (CHLORIDE SILENT POWER LTD.) <br><br> * Ansprüche 1-12 * <br><br> ----- | 1,5,11, 13,14 | |
| | | | **RECHERCHIERTE SACHGEBIETE (Int. Cl.5 )** <br><br> C04B |

Der vorliegende Recherchenbericht wurde für alle Patentansprüche erstellt

| Recherchenort | Abschlußdatum der Recherche | Prüfer |
|---|---|---|
| DEN HAAG | 06 MAERZ 1992 | LUETHE H. |

EPO FORM 1503 03.82 (P0403)